# EUROPÄISCHE PATENTSCHRIFT

(11) **EP 1 197 508 B1**
(45) Veröffentlichungstag und Bekanntmachung des Hinweises auf die Patenterteilung: **15.02.2006**
(21) Anmeldenummer: 01122348.4
(22) Anmeldetag: 19.09.2001
(51) Int. Cl.: C08G 18/66, C08G 18/73, C08K 5/098

(54) **Thermoplastisch verarbeitbare Polyurethan-Formmasse**
Thermoplastic polyurethane molding compound
Composé de moulage polyuréthane thermoplastique

(30) Priorität: 11.10.2000 DE 10050495
(43) Veröffentlichungstag der Anmeldung: 17.04.2002
(73) Patentinhaber: Intier Automotive Eybl Interiors GmbH, 94315 Straubing (DE)
(72) Erfinder: Mühlfeld, Horst, 64689 Grasellenbach (DE); Wagener, Silke, 69469 Weinheim (DE); Christoph, Erich, 63179 Obertshausen (DE); Nyssen, Siegfried, 94315 Straubing (DE)

(56) Entgegenhaltungen:
- EP-A- 0 717 069
- DE-A- 19 940 014
- GB-A- 889 403
- US-A- 5 491 211

## Beschreibung

### Technisches Gebiet

Die Erfindung betrifft eine thermoplastisch verarbeitbare Polyurethan-Formmasse, die leicht zu entfernende migrationsfähigen Nebenprodukten enthält und eine hohe Lichtechtheit aufweist.

### Stand der Technik

Aus den Dokumenten DE 26 58 136 und DE 42 03 307 sind thermoplastisch verarbeitbare Polyurethane (TPU) bekannt, die aus Gemischen verschiedener aliphatischer Polyole und 1,6-Hexamethylendiisocyanat mit Kettenverlängerungsmitteln wie 1,4-Butandiol bestehen. Die dort beschriebenen Polyurethan-Formmassen können insbesondere zur Herstellung von Lebensmittelverpackungen, aber auch zur Herstellung von Folien für dekorative Anwendungen eingesetzt werden. Die in den Patentschriften definierten Polyurethan-Formmassen sind zwar bezügich ihrer Schmelzeigenschaften für thermoplastische Verarbeitungsverfahren sowie hinsichtlich ihres Festigkeitsniveaus für die vorgenannten Anwendungen geeignet, von Nachteil sind jedoch Anteile cyclischer Oligourethane in den Polyurethan-Formmassen. Durch Migration dieser Cyclooligourethane können optische Veränderungen z.B. auf der Oberfläche von Folien hervorgerufen werden.

Zwar werden im Dokument DE 199 40 014 licht- und wärmestabile thermoplastische Polyurethane (TPU) beschrieben, die hohen optischen Anforderungen genügen und nach einem beschleunigten Alterungstest bei 60°C bis 90°C noch Formkörper liefern, die nur eine geringe Belagsbildung zeigen. In Langzeittests, d.h., Lagerung von Proben bei Raumtemperatur über mindestens 100 Tage so wie bei Lagerung von Proben in einer wasserdampfgesättigten Atmosphäre über einen Zeitraum von 28 Tagen bei 48°C wird der Migrationsprozess und die Bildung von Weißbelag erheblich beschleunigt
und es zeigen sich auch bei den vorgenannten TPU auf der Oberfläche der Proben Weißbeläge, die zu einer deutlichen Farbveränderung und Mattierung der Proben führen. Für die meisten Anwendungen ist dies in höchstem Maße unerwünscht, weil sich die an der Oberfläche als Weißbelag abscheidenden Stoffe nur schwer oder gar nicht entfernen lassen.

### Darstellung der Erfindung

Die Erfindung hat sich die Aufgabe gestellt, eine thermoplastisch verarbeitbare Polyurethan-Formmasse, die leicht zu entfernende migrationsfähigen Nebenprodukten enthält und eine hohe Lichtechtheit aufweist, anzugeben.

Die Aufgabe wird erfindungsgemäß durch die gattungsgemäß angegebene thermoplastisch verarbeitbare Polyurethan-Formmasse gelöst, die erhalten wird durch Umsetzung eines oder mehrerer aliphatischer Polyole mit einem Molekulargewicht von 450 bis 4000 glmol und einer OH-Zahl von 20 bis 235 ausgewählt aus der Gruppe Polyadipate, Polycaprolactone, Polycarbonate, Polytetrahydrofuran und entsprechenden Copolymeren oder deren Gemische mit 1,6-Hexamethylendiisocyanat und/oder hydriertem Dicyclohexylmethandiisocyanat (H₁₂-MDI) sowie einem Kettenverlängerungsmittel ausgewählt aus der Gruppe 1,5-Pentandiol, 1,6-Hexandiol, 1,4-Cyclohexandiol, 1,4-Bis(hydroxymethyl)cyclohexan und Bis-(hydroxyethyl)-hydrochinon in einem Äquivalenzverhältnis des 1,6-Hexamethylendiisocyanats und/oder hydriertem Dicyclohexylmethandiisocyanat zum Polyol von 1,5 1 bis 14,0 : 1, wobei die NCO-Kennzahl, gebildet aus dem mit 100 multiplizierten Quotienten der Äquivalenzverhältnisse von Isocyanatgruppen zur Summe der Hydroxylgruppen von Polyol und Kettenverlängerungsmittel in einem Bereich von 96 bis 105 liegt und die als weitere Zusätze 0.3 bis 5 Gew.% eines metallseifenhaltigen Fettsäureesters , 0,1 bis 3 Gew.% eines UV-Licht-Absorbers, 0,1 bis 5 Gew.% eines Lichtstabilisators, 0,05 bis 2 Gew.% eines Antioxidants sowie gegebenenfalls bis zu 10 Gew.% eines Farbpigments oder Farbbatch jeweils bezogen auf die Gesamt-Polyurethan-Menge enthält.

Die thermoplastische Polyurethan- Formmasse wird vorteilhafterweise erhalten durch
die verwendung von Potyadipaten aus Ethylenglykol, Diethylenglykol, Propandiol. Butandiol, Pentandiol, Hexandiol, Neopentylglykol, Polycaprolactonen, polycarbonaten, Polytetrahydrofuranen oder Kombinationen daraus, Polycaprolactonen und Copolymeren mit Polycarbonaten und Polytetrahydrofuran, Polypropylenglykol, Polyethylenglykol oder deren Gemische als Polyolkomponente.

Besonders bevorzugt sind thermoplastische Polyurethan-Formmasse, die durch die Verwendung von 1,4-Cyclohexandiol, 1,4-Bis(hydroxymethyl)cyclohexan und Bis-(hydroxyethyl)-hydrochinon als Kettenverlängerungsmittel erhalten werden.

Ganz besonders bevorzugt sind thermoplastische Polyurethan-Formmasse, in denen 1,0 bis 3,0 Gew.% bezogen auf die Gesamt-Polyurethan-Menge des Additivs enthalten sind.

Überraschender Weise wurde gefunden, dass bei der Herstellung aliphatischer Polyurethan-Formmassen auf Polyether- und/oder Polyesterolbasis durch Umsetzung mit 1,6-Hexamethylendiisocyanat und/oder H₁₂-MDI einem Kettenverlägerungsmittel ausgewählt aus der Gruppe 1,5-Pentandiol, 1,6-Hexandiol, 1,4-Cyclohexandiol, 1,4-Bis(hydroxymethyl)cyclohexan und Bis-(hydroxyethyl)-hydrochinon sowie bei Anwesenheit von 0,3 bis 5 Gew.% eines metallseifenhaltigen Fettsäureesters unter den Bedingungen der Langzeitlagerung über einen Zeitraum von mindestens 100 Tagen bei Raumtemperatur bzw. der Lagerung in einer wasserdampfgesättigten Atmosphäre über einen Zeitraum von mindestens 28 Tagen bei 48°C ein Weißbelag gebildet wird, der einfach und bei optischer Begutachtung vollständig entfernt werden kann. Für die Reinigung ist ein trockenes Tuch oder eine wässrige Tensidlösung ausreichend, während bei Polyurethan-Formmassen ohne die genannten Additive der Weißbelag auf der Oberfläche besonders stark haftet. Zum Eliminieren des Weißbelags sind wässrige Seifenlösungen unwirksam. Mit speziellen organischen Lösemitteln ist zwar ein Ablösen des Weißbelags möglich, aber bei dieser Behandlung wird die Oberfläche der Formteile angelöst und beschädigt. Erkennbar ist das an den deutlichen Farb- und Glanzveränderungen der Proben.

Die erfindungsgemäß erhältlichen Polyurethan-Formmassen weisen wie die nachfolgend angegebenen Beispiele zeigen keine mechanischen oder verarbeitungstechnischen Nachteile gegenüber den bekannten aliphatischen thermoplastisch verarbeitbare Polyurethan-Formmassen auf. Auch das Kristallisationsverhalten für einen wirtschaftlichen Verarbeitungsprozeß wird nicht wesentlich beeinflußt, insbesondere wenn 1,4-Cyclohexandiol, 1,4-Bis(hydroxymethyl)cyclohexan oder Bis-(hydroxyethyl)-hydrochinon als Kettenverlängerungsmittel eingesetzt wird. Sie weisen darüber hinaus die nachfolgenden Vorteile auf:
- gute Verarbeitbarkeit in Thermoplast-Verarbeitungsverfahren wie Spritzgießen, Schmelzextrussion, Schmelzspinn-, Sinter- oder Schmelzklebeverfahren,
- gutes Kristallisationsverhalten, insbesondere eine schnelle Rekristallisation für einen wirtschaftlichen Verarbeitungsprozeß in den vorgenannten Verfahren,
- hohe Zug-, Einreiß- und Weiterreißfestigkeit,
- gute elastische Eigenschaften,
- hohe Lichtechtheit, d.h., keine Vergilbung bei Lichteinwirkung.

Ein Entfernen des Weißbelages ohne Beschädigung der Oberfläche kann durch einfaches Abwischen beispielsweise mit einem trockenem Tuch erfolgen. Damit sind die optischen Anforderungen der Automobilindustrie hinsichtlich Lichtechtheit, Farbechtheit, Glanzgrad und frei von Weißbelag erfüllt.

Die Erfindung wird durch die nachfolgenden Beispiele näher erläutert.

### Beispiel 1

Zusammensetzung der Mischung

| | |
|---|---|
| 50,00 Gewichtsteile | Polycarbonatdiol mit einem Molekulargewicht von 2000 und einer OH-Zahl von 56,0, |
| 50,00 Gewichtsteile | Polyester auf Basis von Adipinsäure, Neopentylglykol und Hexandiol mit einem Molekulargewicht von 2000 und einer OH-Zahl von 56,0, |
| 15,57 Gewichtsteile | 1,6-Hexandiol, |
| 30,00 Gewichtsteile | 1,6-Hexamethylendiisocyanat |

### Herstellungsverfahren

Die Herstellung erfolgt im Einstufenverfahren. Polycabonatdiol, Polyester, 1,6-Hexandiol und 1,6-Hexamethylendiisocyanat werden unter Rühren in einem Reaktionskessel auf 80°C erwärmt. Durch die exotherme Reaktion steigt die Temperatur in etwa 14 Minuten auf 180°C an. Bei dieser Temperatur wird das Produkt auf eine Polytetrafluorethylen-Folie gegossen. Nach etwa 8 Stunden kann die entstandene Platte zu Granulat verarbeitet werden.

Die Polyurethan-Formmasse weist folgende Schmelzeigenschaften auf:
Schmelzpunkt: 160°C,
Schmelzindex nach DIN ISO 1133 bei 2,16 kg Belastung,
gemessen bei 170°C: 8,9 g/10 min,
gemessen bei 200°C: 83 g/10 min,
gemessen bei 210°C: 126 g/10 min.

Ein im Preßverfahren hergestellte 1 mm dicke Platte hat folgende Eigenschaften:

| | |
|---|---|
| Zugfestigkeit: | 46,3 MPa, |
| Bruchdehnung: | 735 %, |
| Weiterreißfähigkeit: | 102 N/mm. |

### Compoundierung des thermoplastischen Polyurethans (TPU)

Auf einem Zweischneckenkneter wird das TPU mit den Additiven, Stabilisatoren und Farbpigmenten gemischt. Dabei werden:

| | |
|---|---|
| 100,00 Gewichtsteile | TPU-Granulat |
| 3,00 | Gewichtsteile Farbbatch auf Basis des TPU-Granulats mit einem Pigmentanteil von 40 Gew.% |
| 0,40 | Gewichtsteile UV-Absorber: 2-(2H-benzotriazol)-4,6-bis(1-methyl-1phenylethyl) phenol |
| 0,50 | Gewichtsteile Lichstabilisator: Dimethylsuccinatpolymer mit 4-hydroxy-2,2,6,6-tetramethyl-1-piperidinethanol |
| 0,30 | Gewichtsteile Antioxidants: Ethylen-bis(oxyethylen)bis(3-tert.-butyl-4-hydroxy-5(methylhydrocinnamat) |
| 1,00 | Gewichtsteile Additv: metallseifenhaltiger Fettsäureester |

### Vergleichsbeispiel

Analog Beispiel 1 wurde ein themoplastisches Polyurethan hergestellt und mit den nachfolgenden Komponenten compoundiert:

| | |
|---|---|
| 100,00 | Gewichtsteile TPU-Granulat |
| 3,00 | Gewichtsteile Farbbatch auf Basis des TPU-Granulats mit einem Pigmentanteil von 40 Gew.% |
| 0,40 | Gewichtsteile UV-Absorber: 2-(2H-benzotriazol)-4,6-bis(1-methyl-1phenylethyl) phenol |
| 0,50 | Gewichtsteile Lichstabilisator: Dimethylsuccinatpolymer mit 4-hydroxy-2,2,6,6-tetramethyl-1-piperidinethanol |
| 0,30 | Gewichtsteile Antioxidants: Ethylen-bis(oxyethylen)bis(3-tert.-butyl-4-hydroxy-5(methylhydrocinnamat) |

Die TPU-Formmassen gemäß dem Beispiel und dem Vergleichsbeispiel wurden im Preßverfahren zu 1 mm dicken Platten verpreßt sowie im Kaltmahlverfahren zu Pulvern gemahlen. Aus den Pulvern wurden im Sinterverfahren 1 mm dicke Folien hergestellt.

Die Preßplatten und Sinterfolien gemäß dem Beispiel und dem Vergleichsbeispiel zeigten nach Lagerung über 100 Tage bei Raumtemperatur und bei Lagerung über 28 Tage in Wasserdampf gesättigter Atmosphäre bei 48°C auf der Oberfläche einen Weißbelag. Beim Vergleichsbeispiel war der Weißbelag deutlich stärker ausgeprägt sowohl bei der Langzeitlagerung als auch der Lagerung in Wasserdampf gesättigter Atmosphäre.

**Tabelle 1**

| **Reinigungsverfahren** | **Beispiel nach Lagerung bei RT u H**_{**2**}**O-Atmos.** | **Vergleichsbeispiel nach Lagerung b u. H**_{**2**}**O-Atmos.** |
|---|---|---|
| Abwischen mit trockenem Tuch | Weißbelag vollständig entfernbar, keine Farbveränderung an der Oberfläche | Weißbelag nicht entfernbar, Oberfläche fleckig |
| Abwischen mit Seifenlösung | Weißbelag vollständig entfernbar, keine Farbveränderung an der Oberfläche | Weißbelag nicht vollständig entfernbar, Oberfläche fleckig, matt , |
| Abwischen mit Isopropanol | Weißbelag vollständig entfernbar, keine Farbveränderung an der Oberfläche | Weißbelag nicht vollständig entfernbar, Oberfläche fleckig, matt , |
| Abwischen mit Tetrahydrofuran | keine Prüfung | Anlösen der Oberfläche, Farbveränderung, fleckig |
| Abwischen mit Dimethylformamid | keine Prüfung | Anlösen der Oberfläche, Farbveränderung, fleckig |

## Patentansprüche

1. Thermoplastisch verarbeitbare Polyurethan-Formmasse mit einer hohen Lichtechtheit, erhalten durch Umsetzung eines oder mehrerer aliphatischer Polyole mit einem Molekulargewicht von 450 bis 4000 g/mol und einer OH-Zahl von 20 bis 235 ausgewählt aus der Gruppe Polyadipate, Polycaprolactone, Polycarbonate, Polytetrahydrofuran und entsprechenden Copolymeren oder deren Gemische mit 1,6-Hexamethylendiisocyanat und/oder hydriertem Dicyclohexylmethandiisocyanat sowie einem Kettenverlängerungsmittel ausgewählt aus der Gruppe
1,5-Pentandiol, 1,6-Hexandiol, 1,4-Cyclohexandiol,
1,4-Bis(hydroxymethyl)cyclohexan und Bis-(hydroxyethyl)-hydrochinon in einem Äquivalenzverhältnis des
1,6-Hexamethylendiisocyanats und/oder hydrierten Dicyclohexylmethandiisocyanats zum Polyol von 1,5 : 1 bis
14,0 : 1, wobei die NCO-Kennzahl, gebildet aus dem mit 100 multiplizierten Quotienten der Äquivalenzverhältnisse von Isocyanatgruppen zur Summe der Hydroxylgruppen von Polyol und Kettenverlängerungsmittel in einem Bereich von 96 bis 105 liegt und die als weitere Zusätze 0,3 bis 5 Gew.% metallseifenhaltige Fettsäureester. 0,1 bis 3 Gew.% eines UV-Licht-Absorbers, 0,1 bis 5 Gew.% eines Lichtstabilisators, 0,05 bis 2 Gew.% eines Antioxidants sowie gegebenenfalls bis zu 10 Gew.% eines Farbpigments oder Farbbatch jeweils bezogen auf die Gesamt-Polyurethan-Menge enthält.

2. Thermoplastisch verarbeitbare Polyurethan-Formmasse nach Anspruch 1, erhalten durch die Verwendung von Polyadipaten aus Ethylenglykol, Diethylenglykol. Propandiol, Butandiol, Pentandiol, Hexandiol, Neopentylglykol, Polycaprolactonen, Polycarbonaten, Polytetrahydrofuranen oder Kombinationen daraus, Polycaprolactonen und Copolymeren mit Polycarbonaten und Polytetrahydrofuran. Polypropylenglykol, Polyethylenglykol oder deren Gemische als Polyolkomponente.

3. Thermoplastisch verarbeitbare Polyurethan-Formmasse nach einem der Ansprüche 1 oder 2, erhalten durch die Verwendung von 1,4-Cyclohexandiol, 1,4-Bis(hydroxymethyl)cyclohexan und Bis-(hydroxyethyl)-hydrochinon als Kettenverlängerungsmittel.

4. Thermoplastisch verarbeitbare Polyurethan-Formmasse nach einem der Ansprüche 1 bis 3, **dadurch gekennzeichnet, dass** 1,0 bis 3,0 Gew.% bezogen auf die Gesamt-Polyurethan-Menge des Additivs enthalten sind.

5. Verfahren zur Herstellung einer thermoplastisch verarbeitbaren Polyurethan-Formmasse nach einem der vorangehenden Ansprüche, bei dem die Zusätze in die Polyurethanmasse eingearbeitet werden.

6. Verwendung einer thermoplastisch verarbeitbaren Polyurethan-Formmasse nach einem der Ansprüche 1 bis 4, im Powder-Slush-Verfahren.

## Revendications

1. Matière moulable en polyuréthane pouvant être traitée par thermoplastie et présentant une résistance élevée à la lumière, obtenue par transformation d'un ou de plusieurs polyols aliphatiques d'une masse molaire de 450 à 4000 g/mol et d'une teneur en OH de 20 à 235 choisis dans le groupe des polyadipates, polycaprolactones, polycarbonstes, polytétrahydrofuranes et leurs copolymères ou leurs mélanges avec du 1,6-hexaméthylène-diisocyanate et/ou du dicyclohexylméthane-diisocyanate hydraté, ainsi qu'un allongeur de chaîne choisi dans le groupe suivant : pentane-1,5-diol, hexane-1,6-diol, cyclohexane-1,4-diol, 1,4-bis(hydroxyméthyl)cyclohexane et bis-(hydroxyéthyl)-hydroquinone en rapport d'équivalence de 1,5:1 à 14.0:1 avec du 1,6-hexaméthylène-diisocyanate et/ou du dicyclohexylméthane-diisocyanate hydraté, le nombre caractéristique de NCO, formé à partir du quotient multiplié par 100 des rapports d'équivalence entre les groupes isocyanate et la somme des groupes hydroxyles de polyol et d'allongeurs de chaîne, se situe entre 96 et 105 et contient comme autres additifs 0,3 à 5% en masse d'esters d'acides gras contenant du savon métallique, 0,1 à 3% en masse d'un absorbeur d'UV, 0,1 à 5% en masse d'un stabilisateur de lumière, 0,05 à 2% en masse d'un antioxydant et, éventuellement, jusqu'à 10% en masse d'un pigment coloré ou d'un mélange coloré maître, toujours rapporté à la quantité totale de polyuréthane.

2. Matière moulable en polyuréthane pouvant être traitée par thermoplastie selon la revendication 1, obtenue à partir de polyadipates d'éthylène-glycol, diéthylène-glycol, propanediol, butanediol, pentanediol, hexanediol, néopentylglycol, polycaprolactones, polycarbonates, polytétrahydrofuranes ou leurs combinaisons, polycaprolactunes et copolymères de polycarbonates et polytétrahydrofuranes, polypropylène-glycol, polyéthylène-glycol ou leurs mélanges comme composants polyols.

3. Matière moulable en polyuréthane pouvant être traitée par thermoplastie selon la revendication 1 ou 2, obtenue à partir de cyclohexane-1,4-diol, 1,4-bis(hydroxyméthyl)cyclohexane et bis-(hydroxyéthyl)-hydroquinone comme allongeurs de chaîne.

4. Matière moulable en polyuréthane pouvant être traitée par thermoplastie selon l'une quelconque des revendications 1 à 3, **caractérisée par** une teneur de 1,0 à 3,0% en masse d'additif, rapporté à la quantité totale de polyuréthane.

5. Procédé de fabrication d'une matière moulable en polyuréthane pouvant être traitée par thermoplastie selon l'une quelconque des revendications précédentes, au cours duquel les additifs sont incorporés à la masse de polyuréthane.

6. Emploi d'une matière moulable en polyuréthane pouvant être traitée par thermoplastie selon l'une quelconque des revendications 1 à 4 dans le procédé dit "powder slush".

## Claims

1. A thermoplastically processible highly lightfast polyurethane molding mass, obtained by transforming one or more aliphatic polyols with a molecular weight of 450 to 4000 g/mole and an OH number of 20 to 235, selected from the group of polyadipates, polycaprolactones, polycarbonates, polytetrahydrofurane and their corresponding copolymers and their mixtures, with 1,6-hexamethylenediisocyanate and/or hydrated dicyclohexylmethanediisocyanate and a chain elongation means selected from the group 1,5-pentadiol, 1,6-hexadiol, 1,4-cyclohexanediol,
1,4-bis(hydroxymethyl)cyclohexane and bis-(hydroxymethyl)-hydroquinone in an equivalence ratio of 1,6-hexamethylenediisocyanate and/or hydrated dicyclohexylmethanediisocyanate to polyol of 1.5:1 to 14.0:1, wherein the NCO number which is formed by the quotient, multiplied by 100, of the equivalence ratios of isocyanate groups to the sum of the hydroxyl groups of polyol and chain elongation means is in the range of 96 to 105, and which, as additional supplements, contains 0.3 to 5 % per weight metal soap containing fatty acid esters, 0.1 to 3 % per weight of an UV absorber, 0.1 to 5 % per weight of a light stabilizer, 0.05 to 2 % per weight of an antioxidant and, if necessary, up to 10 % per weight of a color pigment or color batch, each related to the total amount of polyurethane.

2. A thermoplastically processible polyurethane molding mass according to claim 1, obtained by using polyadipates of ethylene glycol, diethylene glycol, propanediol, butanediol pentanediol, hexanediol, neopentyl glycol, polycaprolactones, polycarbonates, polytetrahydrofuranes, or combinations thereof, polycaprolactones and copolymers with polycarbonates and polytetrahydrofurane, polypropylene glycol, polyethylene glycol, and their mixtures as polyol component

3. A thermoplastically processible polyurethane molding mass according to one of the claims 1 or 2, obtained by using 1,4-cyclohexanediol, 1,4-bis(hydroxymethyl)cyclohexane and bis-(hydroxyethyl)-hydrochinone as chain elongation means.

4. A thermoplastically processible polyurethane molding mass according to one of the claims 1 to 3, **characterized by** containing 1.0 to 3.0 % per weight of the additive, related to the total amount of polyurethane.

5. A method for generating a thermoplastically processible polyurethane molding mass according to one of the preceding claims, wherein the additives can be incorporated in the polyurethane mass.

6. The use of a thermoplastically processible polyurethane molding mass according to one of the claims 1 to 4 in a powder slush procedure.
